# FASCICULE DE BREVET EUROPEEN

(11) **EP 4 033 045 B1**
(45) Date de publication et mention de la délivrance du brevet: **02.08.2023**
(21) Numéro de dépôt: 22152152.9
(22) Date de dépôt: 19.01.2022
(51) Int. Cl.: E04B 1/24, E04B 1/26, E04B 1/58, F16B 7/04

(54) **PIÈCE DE JONCTION POUR L'ASSEMBLAGE D'UNE OSSATURE MÉTALLIQUE DÉMONTABLE D'UN BÂTIMENT DÉPLAÇABLE**
VERBINDUNGSSTÜCK ZUR MONTAGE EINES ABNEHMBAREN METALLRAHMENS EINES VERSCHIEBBAREN GEBÄUDES
JOINING PIECE FOR ASSEMBLING A REMOVABLE METAL FRAME OF A DISPLACEABLE BUILDING

(30) Priorité: 25.01.2021 FR 2100691
(43) Date de publication de la demande: 27.07.2022
(73) Titulaire: Séré, 40700 Hagetmau (FR)
(72) Inventeur: SÉRÉ, Christian, 40700 Hagetmau (FR)
(74) Mandataire: A.P.I. Conseil

(56) Documents cités:
- WO-A1-80/02587
- US-A- 4 196 556
- US-A1- 2011 308 063

## Description

### Domaine technique

L'invention concerne le domaine général des constructions dont les pièces porteuses sont métalliques. En particulier, il concerne une pièce de jonction destinée à être utilisée dans l'assemblage d'une ossature métallique d'un bâtiment déplaçable, notamment d'un bâtiment agricole. L'invention concerne également un procédé d'assemblage et un système constructif pour la réalisation d'une telle ossature métallique.

### Technique antérieure

Ci-après, nous décrivons l'art antérieur connu à partir duquel l'invention a été développée.

On connait des ossatures de bâtiment que l'on réalise à partir de tubes métalliques qui forment des poteaux et des traverses et que l'on relie entre eux par des pièces de jonction.

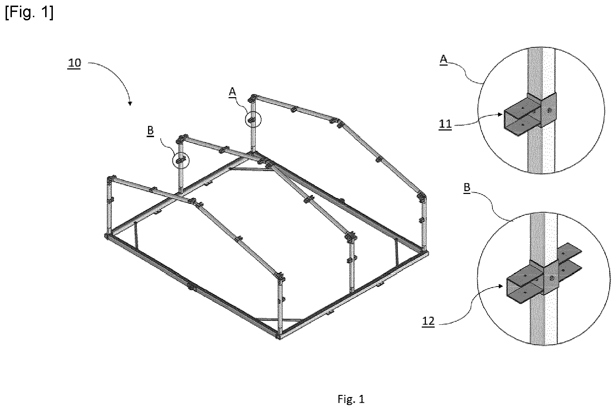

La figure 1 illustre une telle ossature métallique 10 dans laquelle les pièces de jonction 11, 12 relient les tubes métalliques. En particulier, dans la figure 1, la pièce de jonction 11 qui est visible grâce à un arraché partiel dont un agrandissement A est fourni, permet la reprise d'un seul tube métallique, tandis que la pièce de jonction 12 qui est visible grâce à un arraché partiel dont un agrandissement B est fourni permet la reprise de deux tubes métalliques.

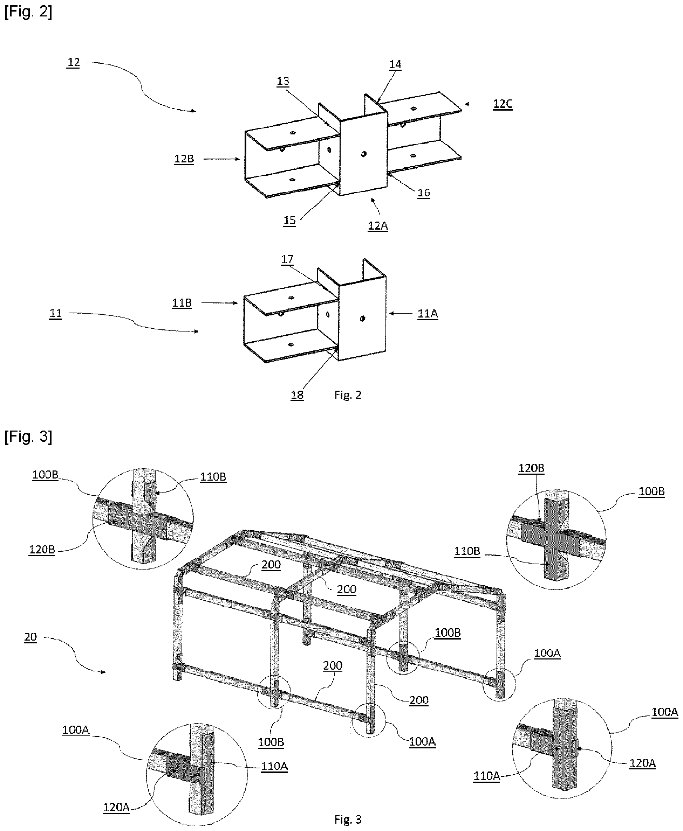

La figure 2 illustre la structure de ces pièces de jonction 11, 12 de l'art antérieur qui sont réalisées à partir de tronçons de profilés métalliques que l'on soude ensemble.

En particulier, la pièce de jonction 11 comprend deux tronçons de profilés métalliques 11A, 11B qui sont soudés ensemble le long de lignes de soudure 17, 18.

En outre, la pièce de jonction 12 comprend trois tronçons de profilés métalliques 12A, 12B, 12C qui sont soudés ensemble le long de lignes de soudure 13, 14, 15, 16.

Ainsi, l'assemblage de l'ossature métallique 10 nécessite des opérations de soudure que l'on réalise généralement sur place. Ces opérations de soudure nécessitent d'avoir un outillage adapté, prennent du temps et ne peuvent être démontées facilement.

Par ailleurs, dans le domaine des bâtiments agricoles, la dégradation des déjections animales se traduit par leur transformation en effluents liquides (p. ex. de l'urée, de l'éthanol, de l'ammoniaque) qui sont très corrosifs et qui peuvent détériorer les soudures et provoquer des ruptures des lignes de soudure 13, 14, 15, 16, 17, 18 et ainsi fragiliser la structure de l'ossature métallique 10. Généralement, il est nécessaire d'appliquer des dépôts chimiques ou physiques anticorrosion sur les soudures afin de les protéger.

En outre, une analyse statique des pièces de jonction 11, 12 de l'art antérieur a montré leur fragilité accrue qui peut mener à la casse lorsque les différents tronçons de profilés métalliques 11A, 11B, 12A, 12B, 12C qui les composent sont soumis à des forces antagonistes, par exemple en présence d'un régime vibratoire engendré par le vent ou d'autres conditions climatiques.

D'autres types de pièces de connexion sont également connus de l'art antérieur, voir par exemple US 2011/308063 A1.

### Résumé de l'invention

L'invention vise à pallier ces inconvénients.

L'invention vise en particulier une pièce de jonction qui est destinée à être utilisée dans l'assemblage de tubes métalliques. Et ce, notamment pour la réalisation d'une ossature métallique démontable d'un bâtiment déplaçable, par exemple d'un bâtiment agricole.

Dans l'invention, la pièce de jonction comprend une première partie de la pièce de jonction et une deuxième partie de la pièce de jonction qui sont conçues pour être assemblées de manière démontable par des moyens de fixation amovibles lors d'une première opération d'assemblage. Par ailleurs, la pièce de jonction est agencée de sorte que,
- la première partie de la pièce de jonction comprend un premier canal de guidage et un deuxième canal de guidage,
   - le premier canal de guidage étant destiné à recevoir de manière coulissante une partie d'extrémité d'un premier tube métallique,
   - le deuxième canal de guidage étant destiné à recevoir de manière coulissante une partie d'extrémité d'au moins un deuxième tube métallique, le deuxième canal de guidage étant positionné de manière sensiblement perpendiculaire à une partie centrale du premier canal de guidage,
- la deuxième partie de la pièce de jonction comprend un troisième canal de guidage qui présente une ouverture traversante transversale,
   - le troisième canal de guidage étant destiné, conjointement avec le deuxième canal de guidage, à recevoir de manière coulissante une partie d'extrémité d'au moins le deuxième tube métallique,
   - l'ouverture traversante transversale étant destinée, conjointement avec le premier canal de guidage, à recevoir de manière coulissante une partie d'extrémité du premier tube métallique.
   En outre, la pièce de jonction est agencée de sorte que,
   - le premier canal de guidage, le deuxième canal de guidage et le troisième canal de guidage présentent chacun une section transversale en forme de U ou similaire avec une âme bordée par deux ailes latérales opposées, et également dans laquelle, lors de la première opération d'assemblage,
   - la pièce de jonction est agencée de manière à entourer le premier tube métallique et l'au moins deuxième tube métallique, de sorte que,
      - les ailes latérales opposées du troisième canal de guidage couvrent tout ou partie des ailes latérales opposées du deuxième canal de guidage, et
      - l'ouverture traversante transversale s'étend en regard de tout ou partie de la partie centrale du premier canal de guidage.

Dans un premier mode de réalisation, la largeur du troisième canal de guidage est sensiblement supérieure à la largeur du deuxième canal de guidage, et la largeur de l'ouverture traversante transversale est sensiblement supérieure à la largeur du premier canal de guidage.

Dans un deuxième mode de réalisation, la première partie de la pièce de jonction et la deuxième partie de la pièce de jonction sont pourvues de trous qui sont conçus pour recevoir les moyens de fixation amovibles de sorte que les moyens de fixation amovibles soient en prise avec le premier tube métallique et l'au moins deuxième tube métallique.

Dans une première mise en oeuvre, le deuxième canal de guidage est disposé de sorte que l'une de ses extrémités est directement reliée à la partie centrale du premier canal de guidage.

Dans un exemple de la première mise en oeuvre, l'ouverture traversante transversale est ménagée dans une partie d'extrémité du troisième canal de guidage, la partie d'extrémité étant terminée par une aile de retenue verticale qui borde l'âme du troisième canal de guidage et qui est sensiblement perpendiculaire aux deux ailes latérales opposées du troisième canal de guidage. En outre, la pièce de jonction est agencée de sorte que lors de la première opération d'assemblage, l'aile de retenue verticale couvre tout ou partie de la partie centrale de l'aile latérale du premier canal de guidage qui est la plus éloignée du deuxième canal de guidage.

Dans une deuxième mise en oeuvre, le deuxième canal de guidage est disposé de sorte qu'une partie centrale du deuxième canal de guidage se confond avec la partie centrale du premier canal de guidage, et la pièce de jonction est agencée de sorte que le deuxième canal de guidage est en outre destiné à recevoir de manière coulissante une partie d'extrémité d'un troisième tube métallique, en regard du deuxième tube métallique.

Dans un exemple de la deuxième mise en oeuvre, l'ouverture traversante transversale est ménagée dans une partie centrale du troisième canal de guidage.

Dans un troisième mode de réalisation, la pièce de jonction comprend en outre une troisième partie de la pièce de jonction qui comprend un élément de manchon coudé selon un angle prédéterminé et un gousset de renfort. L'élément de manchon coudé comprend une première partie d'extrémité et une deuxième partie d'extrémité qui sont agencées de sorte que, avant la première opération d'assemblage, la première partie d'extrémité est destinée à être reçue à l'intérieur d'un premier tube métallique et la deuxième partie d'extrémité est destinée à être reçue à l'intérieur d'un deuxième tube métallique. Par ailleurs, la pièce de jonction est agencée de sorte que, lors d'une deuxième opération d'assemblage après la première opération d'assemblage, le gousset de renfort est destiné à être,
- disposé dans l'angle prédéterminé formé par le premier tube métallique et le deuxième tube métallique, et
- fixé de manière démontable par les moyens de fixation amovibles au premier tube métallique et au deuxième tube métallique, de manière à renforcer la liaison entre le premier tube métallique et le deuxième tube métallique.

L'invention vise aussi un système constructif pour la réalisation d'une ossature métallique démontable d'un bâtiment déplaçable, notamment d'un bâtiment agricole. Le système constructif comprend :
- au moins deux tubes métalliques,
- au moins une pièce de jonction selon l'invention pour l'assemblage des tubes métalliques, et
- une pluralité de moyens de fixation amovibles.

L'invention vise également une ossature métallique démontable pour bâtiment déplaçable, notamment d'un bâtiment agricole, comprenant :
- une pluralité de tubes métalliques formant des poteaux, des pannes et des fermes de l'ossature métallique,
dans laquelle au moins deux parties d'extrémité de tubes métalliques se rejoignent et sont assemblées de manière démontable par une pièce de jonction selon l'invention.

Enfin, l'invention vise un procédé d'assemblage d'une ossature métallique démontable d'un bâtiment déplaçable, notamment d'un bâtiment agricole, le procédé comprenant :
- une première étape de fourniture d'au moins deux tubes métalliques,
- une deuxième étape de fourniture d'au moins une pièce de jonction selon l'invention pour l'assemblage des tubes métalliques,
- une troisième étape de fourniture d'une pluralité de moyens de fixation amovibles,
- une première étape de coulissement d'une partie d'extrémité d'un premier tube métallique dans le premier canal de guidage de la première partie de la pièce de jonction, de sorte que la partie d'extrémité du premier tube métallique s'étend au-delà d'au moins une des parties d'extrémités du premier canal de guidage,
- une deuxième étape de coulissement d'une partie d'extrémité d'au moins un deuxième tube métallique dans le deuxième canal de guidage de la première partie de la pièce de jonction, de sorte que la partie d'extrémité de l'au moins deuxième tube métallique vient en butée contre la partie d'extrémité du premier tube métallique qui est inséré dans le premier canal de guidage, et
- une étape d'assemblage, avec les moyens de fixation amovibles, de la deuxième partie de la pièce de jonction, de la première partie de la pièce de
jonction, du premier tube métallique et de l'au moins deuxième tube métallique.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente une ossature métallique réalisée selon l'art antérieur.
[Fig. 2] La figure 2 représente des pièces de jonction utilisées dans l'ossature de la figure 1.
[Fig. 3] La figure 3 représente une ossature métallique selon l'invention.
[Fig. 4] La figure 4 représente une première façon de réaliser une première partie de la pièce de jonction selon l'invention.
[Fig. 5] La figure 5 représente une deuxième façon de réaliser une première partie de la pièce de jonction selon l'invention.
[Fig. 6] La figure 6 représente une première façon de réaliser une deuxième partie de la pièce de jonction selon l'invention.
[Fig. 7] La figure 7 représente une deuxième façon de réaliser une deuxième partie de la pièce de jonction selon l'invention.
[Fig. 8] La figure 8 représente une vue éclatée d'une partie de l'ossature de la figure 3 avec une façon de réaliser une troisième partie de la pièce de jonction selon l'invention.
[Fig. 9] La figure 9 représente un procédé d'assemblage de l'ossature de la figure 3.

Les figures ne respectent pas nécessairement les échelles, notamment en épaisseur, et ce à des fins d'illustration.

### Description des modes de réalisation

Ci-après, nous décrivons un résumé de l'invention avant de présenter en détail comment l'invention remédie aux inconvénients de l'art antérieur.

L'invention propose une pièce de jonction qui ne nécessite pas de soudure et qui est démontable.

En outre, la pièce de jonction selon l'invention est en deux parties et est agencée de manière à résister à des forces antagonistes auxquelles elle peut être soumise.

En particulier, grâce à son agencement astucieux en deux parties, la pièce de jonction est bien adaptée pour subir des forces qui proviennent de directions antagonistes. En effet, lorsqu'elle est montée, la pièce de jonction est verrouillée dans toutes les directions de sorte que les efforts mécaniques auxquels il peut être soumis peuvent être mieux répartis.

Ainsi, l'invention concerne une pièce de jonction qui est destinée à être utilisée dans l'assemblage de tubes métalliques pour la réalisation d'une ossature métallique démontable d'un bâtiment déplaçable.

On entend par « bâtiment déplaçable », un ouvrage mobile d'un seul tenant que l'on édifie au-dessus du niveau du sol et qui a une fonction d'abri. De tels bâtiments disposent généralement d'un châssis porteur qui permet de les tracter et de les déplacer.

Ci-après, et de manière non limitative, nous donnons des exemples de bâtiments déplaçables.

Dans un premier exemple, un bâtiment déplaçable est un bâtiment mobile tel que ceux que l'on utilise dans le domaine agricole.

Ainsi, il peut s'agir d'un bâtiment pour l'élevage avicole, ovin, caprin, porcin ou canin.

La fonction de mobilité d'un tel bâtiment présente de nombreux avantages tels que, entre autres, la limitation des risques sanitaires, le renouvellement de la végétation des parcours, l'optimisation du bien-être animal, la facilité d'entretien et d'usage et l'augmentation de la densité animale par mètre carré.

Dans un deuxième exemple, un bâtiment déplaçable est un bâtiment mobile tel qu'une cabane (p. ex. pour un jardin, pour un garage).

Toutefois, l'invention peut s'appliquer à d'autres bâtiments déplaçables prévus pour abriter du matériel ou des animaux, sans nécessiter de modifications substantielles.

La figure 3 illustre une ossature métallique 20 démontable pour bâtiment déplaçable selon l'invention.

L'ossature métallique 20 comprend une pluralité de tubes métalliques 200 qui forme des poteaux, des pannes et des fermes de l'ossature métallique 20.

De manière connue dans le domaine de la charpenterie, une panne est une pièce horizontale d'une charpente de comble, en bois ou en métal, et qui repose sur les arbalétriers des fermes, et sert de support aux chevrons ou aux panneaux rigides de couverture.

Également, de manière connue, dans le domaine de la charpenterie, une ferme est un assemblage de pièces dans un plan vertical, qui forme l'ossature triangulée d'une charpente. Généralement, toute charpente classique est constituée de fermes établies perpendiculairement à l'axe du comble. Enfin, les fermes sont contreventées par des pannes horizontales qui portent les chevrons et la couverture.

On entend par « tubes métalliques » des éléments tubulaires métallurgiques (p. ex. acier, aluminium, alliage cuivreux) tels que ceux utilisés dans la construction de structures et charpentes métalliques. Généralement, il s'agit de profilés préalablement laminés, étirés ou extrudés.

Dans certaines façons de réaliser l'invention, les tubes métalliques sont creux.

De manière classique, un tube métallique 200 s'étend entre deux parties d'extrémités le long d'un axe longitudinal.

Ci-après, et de manière non limitative, nous décrivons différents exemples de formes des tubes métalliques 200.

Dans un premier exemple, les tubes métalliques 200 présentent une section transversale carrée.

Dans un deuxième exemple, les tubes métalliques 200 présentent une section transversale rectangulaire.

Dans un troisième exemple, les tubes métalliques 200 présentent une section transversale circulaire.

Dans un quatrième exemple, les tubes métalliques 200 présentent une section transversale hexagonale.

Dans un cinquième exemple, les tubes métalliques 200 présentent une section transversale octogonale.

Toutefois, l'invention peut s'appliquer à d'autres formes de tubes métalliques 200, sans nécessiter de modifications substantielles.

De retour à la figure 3, l'ossature métallique 20 comprend au moins deux parties d'extrémité de tubes métalliques 200 qui se rejoignent et sont assemblées de manière démontable par une pièce de jonction 100A, 100B selon l'invention.

De manière non limitative, l'invention comprend une première façon de réaliser une pièce de jonction 100A et une deuxième façon de réaliser une pièce de jonction 100B.

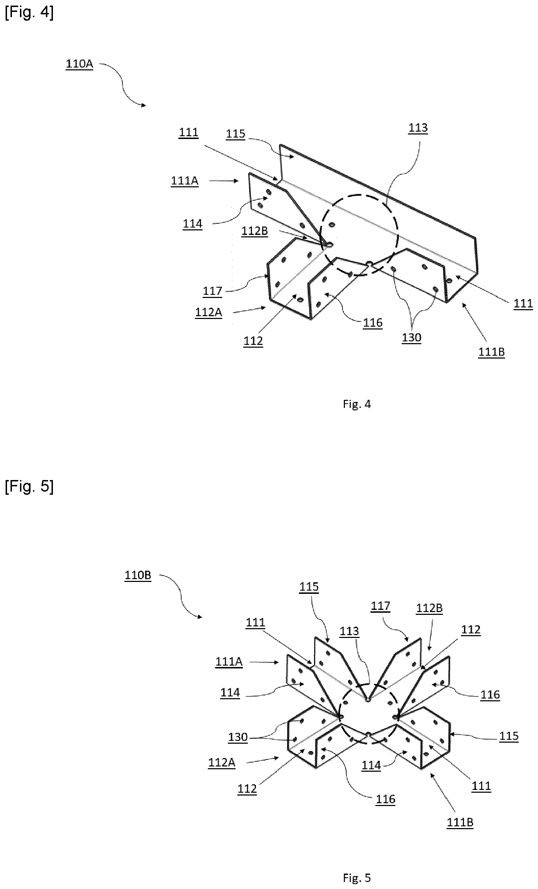

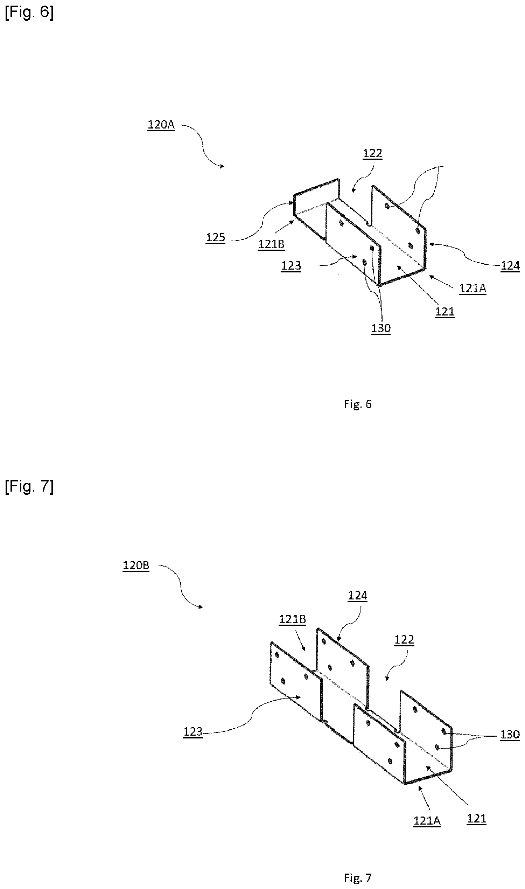

La figure 4 et la figure 5 illustrent la première façon de réaliser une pièce de jonction 100A, tandis que la figure 6 et la figure 7 illustrent la deuxième façon de réaliser une pièce de jonction 100B.

De préférence, mais de manière non limitative, la première façon de réaliser la pièce de jonction 100A est destinée à réaliser la partie de l'ossature métallique 20 qui servira de support pour des murs pignon d'un bâtiment déplaçable selon l'invention.

De préférence, mais de manière non limitative, la deuxième façon de réaliser la pièce de jonction 100B est destinée à réaliser la partie de l'ossature métallique 20 qui servira de support pour des murs de refend ou pour relier des murs gouttereaux d'un bâtiment déplaçable selon l'invention.

En particulier, dans l'invention, la pièce de jonction 100A, 100B comprend une première partie de la pièce de jonction 110A, 120A et une deuxième partie de la pièce de jonction 110B, 120B qui sont conçues pour être assemblées de manière démontable par des moyens de fixation amovibles lors d'une première opération d'assemblage.

On entend par « moyens de fixation amovibles », tout accessoire mécanique qui peut facilement s'enlever et se remettre et qui permet de fixer et d'assembler des éléments entre eux.

Ci-après, et de manière non limitative, nous donnons un exemple de moyens de fixation amovibles.

Dans un exemple, les moyens de fixation amovibles sont des vis autoperceuses (aussi appelées « vis autoforeuses »). Les vis autoperceuses ont l'avantage de réaliser dans la même opération le forage d'un trou et le taraudage des éléments à assembler. Avec de telles vis, l'invention nécessite seulement l'utilisation d'une visseuse.

Toutefois, l'invention peut s'appliquer à d'autres moyens de fixation amovibles, sans nécessiter de modifications substantielles.

Dans une façon particulière de réaliser l'invention, la pièce de jonction 100A, 100B est pourvue de trous 130 qui sont conçus pour recevoir les moyens de fixation amovibles de sorte que les moyens de fixation amovibles soient en prise avec la pièce de jonction 100A, 100B et un tube métallique 200.

L'invention couvre également un système constructif pour la réalisation de l'ossature métallique 20. En particulier, le système constructif selon l'invention comprend au moins deux tubes métalliques 200, au moins une pièce de jonction 100A, 100B pour l'assemblage des tubes métalliques 200, et une pluralité de moyens de fixation amovibles.

La figure 4 illustre la première façon de réaliser une première partie de la pièce de jonction 110A.

Dans l'exemple de la figure 4, la première partie de la pièce de jonction 110A comprend un premier canal de guidage 111 et un deuxième canal de guidage 112.

Le premier canal de guidage 111 comprend deux parties d'extrémités 111A, 111B qui encadrent une partie centrale 113.

On entend par « partie centrale », une partie du premier canal de guidage 111 qui se situe approximativement à équidistance de ses parties d'extrémités 111A, 111B.

Le premier canal de guidage 111 est destiné à recevoir de manière coulissante une partie d'extrémité d'un premier tube métallique 200.

En pratique, la partie d'extrémité du premier tube métallique 200 est apte à être insérée depuis l'une des parties d'extrémités 111A, 111B du premier canal de guidage 111, et à être déplacée en translation le long de l'axe longitudinal du premier canal de guidage 111 en direction de l'autre partie d'extrémité 111A, 111B du premier canal de guidage 111.

Dans l'invention, le premier canal de guidage 111 présente une section transversale en forme de U ou similaire avec une âme bordée par deux ailes latérales opposées 114, 115.

Le deuxième canal de guidage 112 comprend deux parties d'extrémités 112A, 112B qui encadrent une partie centrale.

On entend par « partie centrale », une partie du deuxième canal de guidage 112 qui se situe approximativement à équidistance de ses parties d'extrémités 112A, 112B.

Le deuxième canal de guidage 112 est destiné à recevoir de manière coulissante une partie d'extrémité d'au moins un deuxième tube métallique 200.

En pratique, la partie d'extrémité du deuxième tube métallique 200 est apte à être insérée depuis l'une des parties d'extrémités 112A, 112B du deuxième canal de guidage 112, et à être déplacée en translation le long de l'axe longitudinal du deuxième canal de guidage 112 en direction de l'autre partie d'extrémité 112A, 112B du deuxième canal de guidage 112.

Dans l'invention, le deuxième canal de guidage 112 présente une section transversale en forme de U ou similaire avec une âme bordée par deux ailes latérales opposées 116, 117.

Par ailleurs, le deuxième canal de guidage 112 est positionné de manière sensiblement perpendiculaire à la partie centrale 113 du premier canal de guidage 111.

En particulier, dans l'exemple de la figure 4, le deuxième canal de guidage 112 est disposé de sorte que l'une de ses extrémités 112B est directement reliée à la partie centrale 113 du premier canal de guidage 111.

La figure 5 illustre une deuxième façon de réaliser une première partie de la pièce de jonction 110B.

Dans l'exemple de la figure 5, la première partie de la pièce de jonction 110B comprend également le premier canal de guidage 111 et le deuxième canal de guidage 112 tels que décrits sur la figure 4 pour illustrer la première façon de réaliser la première partie de la pièce de jonction 110A.

Toutefois, dans l'exemple de la figure 5, le deuxième canal de guidage 112 est disposé de sorte que la partie centrale du deuxième canal de guidage 112 se confond avec la partie centrale 113 du premier canal de guidage 111.

On entend par « se confondre », la caractéristique selon laquelle la partie centrale du deuxième canal de guidage 112 est difficilement discernable avec la partie centrale 113 du premier canal de guidage 111.

Dans cette façon de réaliser une première partie de la pièce de jonction 110B, le deuxième canal de guidage 112 est en outre destiné à recevoir de manière coulissante une partie d'extrémité d'un troisième tube métallique 200, en regard du deuxième tube métallique 200.

En pratique, la partie d'extrémité du deuxième tube métallique 200 et la partie d'extrémité du troisième tube métallique 200 sont aptes à être indépendamment insérées depuis l'une des parties d'extrémités 112A, 112B du deuxième canal de guidage 112, et à être déplacées en translation le long de l'axe longitudinal du deuxième canal de guidage 112 en direction de l'autre partie d'extrémité 112A, 112B du deuxième canal de guidage 112. Ainsi, la partie d'extrémité du deuxième tube métallique 200 et la partie d'extrémité du troisième tube métallique 200 se trouvent en regard l'une de l'autre lorsqu'elles sont insérées dans le deuxième canal de guidage 112.

La figure 6 illustre une première façon de réaliser une deuxième partie de la pièce de jonction 120A.

Dans l'exemple de la figure 6, la deuxième partie de la pièce de jonction 120A, 120B comprend un troisième canal de guidage 121 qui présente une ouverture traversante transversale 122.

Le troisième canal de guidage 121 comprend deux parties d'extrémités 121A, 121B qui encadrent une partie centrale.

On entend par « partie centrale », une partie du troisième canal de guidage 121 qui se situe approximativement à équidistance de ses parties d'extrémités 121A, 121B.

Le troisième canal de guidage 121 est destiné, conjointement avec le deuxième canal de guidage 112, à recevoir de manière coulissante une partie d'extrémité d'au moins le deuxième tube métallique 200.

Dans l'invention, le troisième canal de guidage 121 présente une section transversale en forme de U ou similaire avec une âme bordée par deux ailes latérales opposées 123, 124.

Dans une façon particulière de réaliser l'invention, la largeur du troisième canal de guidage 121 est sensiblement supérieure à la largeur du deuxième canal de guidage 112. En outre, la largeur de l'ouverture traversante transversale 122 est sensiblement supérieure à la largeur du premier canal de guidage 111.

L'ouverture traversante transversale 122 est destinée, conjointement avec le premier canal de guidage 111, à recevoir de manière coulissante une partie d'extrémité du premier tube métallique 200.

En particulier, dans l'exemple de la figure 6, l'ouverture traversante transversale 122 est ménagée dans une partie d'extrémité 121B du troisième canal de guidage 121.

En outre, dans cet exemple de la figure 6, la partie d'extrémité 121B qui jouxte l'ouverture traversante transversale 122 est terminée par une aile de retenue verticale 125.

Dans la figure 6, l'aile de retenue verticale 125 borde l'âme du troisième canal de guidage 121 et est sensiblement perpendiculaire aux deux ailes latérales opposées 123, 124 du troisième canal de guidage 121.

La figure 7 illustre une deuxième façon de réaliser une deuxième partie de la pièce de jonction 120B.

Dans l'exemple de la figure 7, la deuxième partie de la pièce de jonction 120B comprend également le troisième canal de guidage 121 qui présente l'ouverture traversante transversale 122, tel que décrit sur la figure 6 pour illustrer la première façon de réaliser la deuxième partie de la pièce de jonction 120A.

Toutefois, dans l'exemple de la figure 7, la deuxième partie de la pièce de jonction 120B ne comprend pas l'aile de retenue verticale 125.

En particulier, dans la figure 7, l'ouverture traversante transversale 122 est ménagée dans la partie centrale du troisième canal de guidage 121.

Dans cette façon de réaliser une deuxième partie de la pièce de jonction 120B, le troisième canal de guidage 121 est en outre destiné à recevoir de manière coulissante une partie d'extrémité d'un troisième tube métallique 200, en regard du deuxième tube métallique 200.

En pratique, la partie d'extrémité du deuxième tube métallique 200 et la partie d'extrémité du troisième tube métallique 200 sont aptes à être indépendamment insérées depuis l'une des parties d'extrémités 121A, 121B du troisième canal de guidage 121, et à être déplacées en translation le long de l'axe longitudinal du troisième canal de guidage 121 en direction de l'autre partie d'extrémité 121A, 121B du troisième canal de guidage 121. Ainsi, la partie d'extrémité du deuxième tube métallique 200 et la partie d'extrémité du troisième tube métallique 200 se trouvent en regard l'une de l'autre lorsqu'elles sont insérées dans le troisième canal de guidage 121.

Dans une façon particulière de réaliser l'invention, la pièce de jonction 100A, 100B comprend en outre une troisième partie de la pièce de jonction.

De préférence, mais de manière non limitative, cette façon particulière de réaliser l'invention de réaliser est destinée à réaliser la partie de l'ossature métallique 20 qui servira de support pour des murs-pignon ou des murs de refend d'un bâtiment déplaçable selon l'invention.

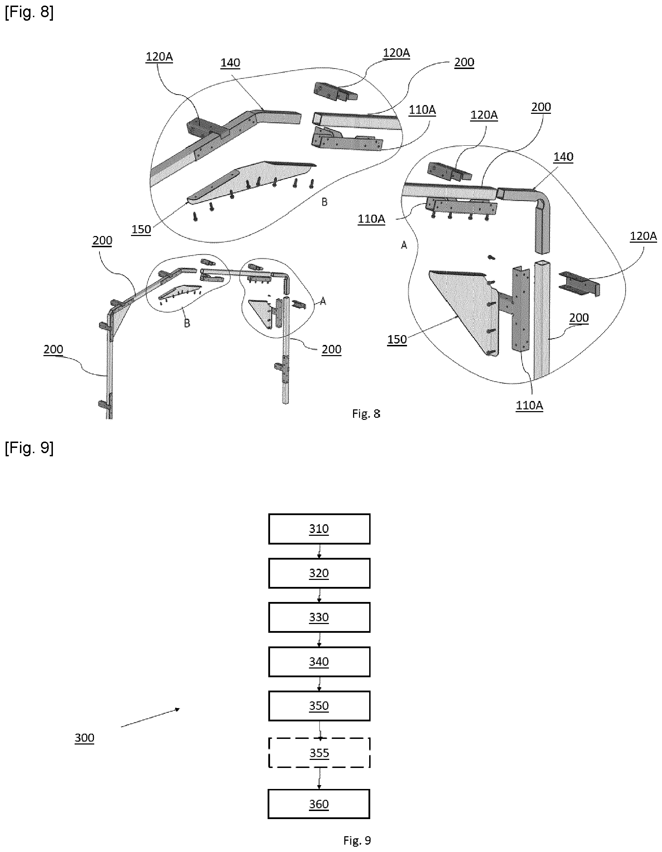

Dans l'exemple de la figure 8, la troisième partie de la pièce de jonction comprend un élément de manchon coudé 140 et un gousset de renfort 150.

En pratique, l'élément de manchon coudé 140 est coudé selon un angle prédéterminé.

Dans l'exemple de la figure 8, l'élément de manchon coudé 140 présente une forme tubulaire.

Ci-après, et de manière non limitative, nous donnons des exemples de valeurs de l'angle prédéterminé.

Dans un premier exemple, l'angle prédéterminé présente une valeur comprise entre 95° et 110°, de préférence sensiblement égale à 105°.

Dans un premier exemple, l'angle prédéterminé présente une valeur comprise entre 145° et 155°, de préférence sensiblement égale à 150°.

Toutefois, l'invention peut s'appliquer à d'autres valeurs d'angle prédéterminé, sans nécessiter de modifications substantielles.

De retour à la figure 8, l'élément de manchon coudé 140 comprend une première partie d'extrémité et une deuxième partie d'extrémité qui sont agencées de sorte que, avant la première opération d'assemblage, la première partie d'extrémité est destinée à être reçue à l'intérieur d'un premier tube métallique 200 et la deuxième partie d'extrémité est destinée à être reçue à l'intérieur d'un deuxième tube métallique 200.

Par ailleurs, la pièce de jonction 100A, 100B est agencée de sorte que, lors d'une deuxième opération d'assemblage après la première opération d'assemblage, le gousset de renfort 150 est destiné à être,
- disposé dans l'angle prédéterminé formé par le premier tube métallique 200 et le deuxième tube métallique 200, et
- fixé de manière démontable par les moyens de fixation amovibles au premier tube métallique 200 et au deuxième tube métallique 200, de manière à renforcer la liaison entre le premier tube métallique 200 et le deuxième tube métallique 200.

L'invention couvre également un procédé d'assemblage de l'ossature métallique 20 démontable, tel qu'illustré dans la figure 9.

Tout d'abord, le procédé 300 comprend une première étape de fourniture 310 d'au moins deux tubes métalliques 200.

Puis, le procédé 300 comprend une deuxième étape de fourniture 320 d'au moins une pièce de jonction 100A, 100B selon l'invention pour l'assemblage des tubes métalliques 200.

Ensuite, le procédé 300 comprend une troisième étape de fourniture 330 d'une pluralité de moyens de fixation amovibles.

En outre, le procédé 300 comprend une première étape de coulissement 340 d'une partie d'extrémité d'un premier tube métallique 200 dans le premier canal de guidage 111 de la première partie de la pièce de jonction 110A, 110B, de sorte que la partie d'extrémité du premier tube métallique 200 s'étend au-delà d'au moins une des parties d'extrémités 111A, 111B du premier canal de guidage 111.

De plus, le procédé 300 comprend une deuxième étape de coulissement 350 d'une partie d'extrémité d'au moins un deuxième tube métallique 200 dans le deuxième canal de guidage 112 de la première partie de la pièce de jonction 110A, 110B, de sorte que la partie d'extrémité de l'au moins deuxième tube métallique 200 vient en butée contre la partie d'extrémité du premier tube métallique 200 qui est inséré dans le premier canal de guidage 111.

Dans une façon particulière de réaliser le procédé, lorsque l'on utilise la deuxième façon de réaliser la pièce de jonction 100B, le procédé 300 comprend en outre une troisième étape de coulissement 355 d'une partie d'extrémité d'un troisième tube métallique 200 dans le deuxième canal de guidage 112 de la première partie de la pièce de jonction 110A, 110B, de sorte que la partie d'extrémité du troisième tube métallique 200 vient en butée contre la partie d'extrémité du premier tube métallique 200 et se trouve en regard du deuxième tube métallique 200 qui est inséré dans le premier canal de guidage 111.

Enfin, le procédé 300 comprend une étape d'assemblage 360, avec les moyens de fixation amovibles, de la deuxième partie de la pièce de jonction 120A, 120B, de la première partie de la pièce de jonction 110A, 11 0B, du premier tube métallique 200 et de l'au moins deuxième tube métallique 200.

Dans une façon particulière de réaliser le procédé, lorsque l'on utilise la deuxième façon de réaliser la pièce de jonction 100B, l'étape d'assemblage 360 comprend l'assemblage, avec les moyens de fixation amovibles, de la deuxième partie de la pièce de jonction 120A, 120B, de la première partie de la pièce de jonction 110A, 110B, du premier tube métallique 200 du deuxième tube métallique 200 et du troisième tube métallique 200.

De préférence, afin de ne pas gêner la réalisation du bardage de murs du bâtiment, on fixe tout ou partie des moyens de fixation amovibles de sorte que leurs têtes se trouvent à l'intérieur de la pièce de jonction 100A, 100B.

Avec le procédé 300, lors de la première opération d'assemblage, la pièce de jonction 100A, 100B est agencé de manière à entourer le premier tube métallique 200 et l'au moins deuxième tube métallique 200, de sorte que les ailes latérales opposées 123, 124 du troisième canal de guidage 121 couvrent tout ou partie des ailes latérales opposées 116, 117 du deuxième canal de guidage 112.

Autrement dit, les faces internes des ailes latérales opposées 123, 124 du troisième canal de guidage 121 se trouvent alors en regard des faces externes des ailes latérales opposées 116, 117 du deuxième canal de guidage 112.

Ainsi, la première partie de la pièce de jonction 1 10A, 110B et la première partie de la pièce de jonction 120A, 120B s'empêchent mutuellement de plier le premier tube métallique 200 et l'au moins deuxième tube métallique 200, notamment lorsqu'elles sont soumises à des forces antagonistes.

Par ailleurs, lorsque l'on utilise la première façon de réaliser la pièce de jonction 100A, la pièce de jonction 100A, 100B est agencée de sorte que lors de la première opération d'assemblage, l'aile de retenue verticale 125 du troisième canal de guidage 121 couvre tout ou partie de la partie centrale de l'aile latérale 115 du premier canal de guidage 111 qui est la plus éloignée du deuxième canal de guidage 112.

Autrement dit, la face interne de l'aile de retenue verticale 125 du troisième canal de guidage 121 se trouve alors en regard de la face externe de la partie centrale de l'aile latérale 115 du premier canal de guidage 111 qui est la plus éloignée du deuxième canal de guidage 112.

La première opération d'assemblage permet également que l'ouverture traversante transversale 122 s'étende en regard de tout ou partie de la partie centrale 113 du premier canal de guidage 111.

Dans le cadre de la réalisation de la partie de l'ossature métallique 20 qui servira de support pour des murs-pignon ou des murs de refend d'un bâtiment déplaçable, le procédé 300 comprend en outre, avant la première opération d'assemblage,
- une première étape d'insertion de la première partie d'extrémité d'au moins un élément de manchon coudé 140 à l'intérieur d'un premier tube métallique 200, et
- une deuxième étape d'insertion de la deuxième partie d'extrémité de l'élément de manchon coudé 140 à l'intérieur d'un deuxième tube métallique 200.

Puis, lors d'une deuxième opération d'assemblage après la première opération d'assemblage, le procédé 300 comprend en outre,
- une étape de disposition du gousset de renfort 150 dans l'angle prédéterminé formé par le premier tube métallique 200 et le deuxième tube métallique 200, et
- une étape de fixation de manière démontable par les moyens de fixation amovibles au premier tube métallique 200 et au deuxième tube métallique 200, de manière à renforcer la liaison entre le premier tube métallique 200 et le deuxième tube métallique 200.

Grâce à la présente invention, on réalise de façon extrêmement simple l'assemblage entre les tubes métalliques 200 d'une structure métallique 20. On évite par conséquent d'avoir à utiliser des pièces de jonctions que l'on réalise par soudure comme c'est le cas dans l'art antérieur.

Ceci permet d'optimiser le temps de construction de l'ossature métallique 20. Cela trouve un intérêt d'autant plus important puisque la pièce de jonction 100A, 100B selon l'invention est destiné à former les ossatures métalliques 20 de bâtiments démontables et déplaçables.

Le temps et le procédé de démontage de ces ossatures métalliques 20 se trouvent par conséquent également largement réduits et simplifiés par rapport aux systèmes constructifs de l'art antérieur.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures, qui entrent dans le cadre des revendications annexées.

## Revendications

1. Pièce de jonction (100A, 100B) destinée à être utilisée dans l'assemblage de tubes métalliques (200) pour la réalisation d'une ossature métallique (20) démontable d'un bâtiment déplaçable, notamment d'un bâtiment agricole, la pièce de jonction (100A, 100B) comprenant une première partie de la pièce de jonction (110A, 110B) et une deuxième partie de la pièce de jonction (120A, 120B) qui sont conçues pour être assemblées de manière démontable par des moyens de fixation amovibles lors d'une première opération d'assemblage,
dans laquelle,
- la première partie de la pièce de jonction (110A, 110B) comprend un premier canal de guidage (111) et un deuxième canal de guidage (112),
- le premier canal de guidage (111) étant destiné à recevoir de manière coulissante une partie d'extrémité d'un premier tube métallique (200),
- le deuxième canal de guidage (112) étant destiné à recevoir de manière coulissante une partie d'extrémité d'au moins un deuxième tube métallique (200), le deuxième canal de guidage (112) étant positionné de manière sensiblement perpendiculaire à une partie centrale (113) du premier canal de guidage (111),
- la deuxième partie de la pièce de jonction (120A, 120B) comprend un troisième canal de guidage (121) qui présente une ouverture traversante transversale (122),
- le troisième canal de guidage (121) étant destiné, conjointement avec le deuxième canal de guidage (112), à recevoir de manière coulissante une partie d'extrémité d'au moins le deuxième tube métallique (200),
- l'ouverture traversante transversale (122) étant destinée, conjointement avec le premier canal de guidage (111), à recevoir de manière coulissante une partie d'extrémité du premier tube métallique (200),
et dans laquelle,
- le premier canal de guidage (111), le deuxième canal de guidage (112) et le troisième canal de guidage (121) présentent chacun une section transversale en forme de U ou similaire avec une âme bordée par deux ailes latérales opposées (114, 115, 116, 117, 123, 124),
et également dans laquelle, lors de la première opération d'assemblage,
- la pièce de jonction (100A, 100B) est agencée de manière à entourer le premier tube métallique (200) et l'au moins deuxième tube métallique (200), de sorte que,
- les ailes latérales opposées (123, 124) du troisième canal de guidage (121) couvrent tout ou partie des ailes latérales opposées (116, 117) du deuxième canal de guidage (112), et
- l'ouverture traversante transversale (122) s'étend en regard de tout ou partie de la partie centrale (113) du premier canal de guidage (111).

2. Pièce de jonction (100A, 100B) selon la revendication 1 dans laquelle,
- la largeur du troisième canal de guidage (121) est sensiblement supérieure à la largeur du deuxième canal de guidage (112), et
- la largeur de l'ouverture traversante transversale (122) est sensiblement supérieure à la largeur du premier canal de guidage (111).

3. Pièce de jonction (100A, 100B) selon l'une quelconque des revendications 1 à 2, dans laquelle la première partie de la pièce de jonction (110A, 110B) et la deuxième partie de la pièce de jonction (120A, 120B) sont pourvues de trous (130) qui sont conçus pour recevoir les moyens de fixation amovibles de sorte que les moyens de fixation amovibles soient en prise avec le premier tube métallique (200) et l'au moins deuxième tube métallique (200).

4. Pièce de jonction (100A, 100B) selon l'une quelconque des revendications 1 à 3, dans laquelle le deuxième canal de guidage (112) est disposé de sorte que l'une de ses extrémités est directement reliée à la partie centrale (113) du premier canal de guidage (111).

5. Pièce de jonction (100A, 100B) selon l'une quelconque des revendications 1 à 4, dans laquelle l'ouverture traversante transversale (122) est ménagée dans une partie d'extrémité du troisième canal de guidage (121), la partie d'extrémité étant terminée par une aile de retenue verticale (125) qui borde l'âme du troisième canal de guidage (121) et qui est sensiblement perpendiculaire aux deux ailes latérales opposées (123, 124) du troisième canal de guidage (121), la pièce de jonction (100A, 100B) étant agencé de sorte que lors de la première opération d'assemblage, l'aile de retenue verticale (125) couvre tout ou partie de la partie centrale de l'aile latérale (115) du premier canal de guidage (111) qui est la plus éloignée du deuxième canal de guidage (112).

6. Pièce de jonction (100A, 100B) selon l'une quelconque des revendications 1 à 3, dans laquelle le deuxième canal de guidage (112) est disposé de sorte qu'une partie centrale du deuxième canal de guidage (112) se confond avec la partie centrale (113) du premier canal de guidage (111), et dans laquelle le deuxième canal de guidage (112) est en outre destiné à recevoir de manière coulissante une partie d'extrémité d'un troisième tube métallique (200), en regard du deuxième tube métallique (200).

7. Pièce de jonction (100A, 100B) selon l'une quelconque des revendications 1 à 3 et 6, dans laquelle l'ouverture traversante transversale (122) est ménagée dans une partie centrale du troisième canal de guidage (121).

8. Pièce de jonction (100A, 100B) selon l'une quelconque des revendications 1 à 7, comprenant en outre une troisième partie de la pièce de jonction qui comprend un élément de manchon coudé (140) selon un angle prédéterminé et un gousset de renfort (150),
- l'élément de manchon coudé (140) comprenant une première partie d'extrémité et une deuxième partie d'extrémité qui sont agencées de sorte que, avant la première opération d'assemblage, la première partie d'extrémité est destinée à être reçue à l'intérieur d'un premier tube métallique (200) et la deuxième partie d'extrémité est destinée à être reçue à l'intérieur d'un deuxième tube métallique (200), et
- la pièce de jonction (100A, 100B) est agencée de sorte que, lors d'une deuxième opération d'assemblage après la première opération d'assemblage, le gousset de renfort (150) est destiné à être,
- disposé dans l'angle prédéterminé formé par le premier tube métallique (200) et le deuxième tube métallique (200), et
- fixé de manière démontable par les moyens de fixation amovibles au premier tube métallique (200) et au deuxième tube métallique (200), de manière à renforcer la liaison entre le premier tube métallique (200) et le deuxième tube métallique (200).

9. Système constructif pour la réalisation d'une ossature métallique (20) démontable d'un bâtiment déplaçable, notamment d'un bâtiment agricole, le système constructif comprenant :
- au moins deux tubes métalliques (200),
- au moins une pièce de jonction (100A, 100B) selon l'une quelconque des revendications 1 à 8 pour l'assemblage des tubes métalliques (200), et
- une pluralité de moyens de fixation amovibles.

10. Ossature métallique (20) démontable pour bâtiment déplaçable, notamment d'un bâtiment agricole, comprenant :
- une pluralité de tubes métalliques (200) formant des poteaux, des pannes et des fermes de l'ossature métallique (20),
dans laquelle au moins deux parties d'extrémité de tubes métalliques (200) se rejoignent et sont assemblées de manière démontable par une pièce de jonction (100A, 100B) selon l'une quelconque des revendications 1 à 8.

11. Procédé (300) d'assemblage d'une ossature métallique (20) démontable d'un bâtiment déplaçable, notamment d'un bâtiment agricole, le procédé comprenant :
- une première étape de fourniture (310) d'au moins deux tubes métalliques (200),
- une deuxième étape de fourniture (320) d'au moins une pièce de jonction (100A, 100B) selon l'une quelconque des revendications 1 à 8 pour l'assemblage des tubes métalliques (200),
- une troisième étape de fourniture (330) d'une pluralité de moyens de fixation amovibles,
- une première étape de coulissement (340) d'une partie d'extrémité d'un premier tube métallique (200) dans le premier canal de guidage (111) de la première partie de la pièce de jonction (110A, 110B), de sorte que la partie d'extrémité du premier tube métallique (200) s'étend au-delà d'au moins une des parties d'extrémités (111A, 111B) du premier canal de guidage (111),
- une deuxième étape de coulissement (350) d'une partie d'extrémité d'au moins un deuxième tube métallique (200) dans le deuxième canal de guidage (112) de la première partie de la pièce de jonction (110A, 110B), de sorte que la partie d'extrémité de l'au moins deuxième tube métallique (200) vient en butée contre la partie d'extrémité du premier tube métallique (200) qui est inséré dans le premier canal de guidage (111), et
- une étape d'assemblage (360), avec les moyens de fixation amovibles, de la deuxième partie de la pièce de jonction (120A, 120B), de la première partie de la pièce de jonction (110A, 110B), du premier tube métallique (200) et de l'au moins deuxième tube métallique (200).

## Patentansprüche

1. Verbindungsstück (100A, 100B), das zur Verwendung bei der Montage von Metallrohren (200) zur Herstellung eines demontierbaren Metallgerüsts (20) eines verlagerbaren Gebäudes, insbesondere eines landwirtschaftlichen Gebäudes, bestimmt ist, wobei das Verbindungsstück (100A, 100B) einen ersten Abschnitt des Verbindungsstücks (110A, 110B) und einen zweiten Abschnitt des Verbindungsstücks (120A, 120B) umfasst, die konstruiert sind, um bei einem ersten Montagevorgang durch lösbare Befestigungsmittel demontierbar montiert zu sein,
wobei
- der erste Abschnitt des Verbindungsstücks (110A, 110B) einen ersten Führungskanal (111) und einen zweiten Führungskanal (112) umfasst,
- der erste Führungskanal (111) zur gleitenden Aufnahme eines Endabschnitts eines ersten Metallrohrs (200) bestimmt ist,
- der zweite Führungskanal (112) zur gleitenden Aufnahme eines Endabschnitts mindestens eines zweiten Metallrohrs (200) bestimmt ist, wobei der zweite Führungskanal (112) etwa senkrecht zu einem mittigen Abschnitt (113) des ersten Führungskanals (111) positioniert ist,
- der zweite Abschnitt des Verbindungsstücks (120A, 120B) einen dritten Führungskanal (121) umfasst, der eine transversale Durchgangsöffnung (122) aufweist,
- wobei der dritte Führungskanal (121) gemeinsam mit dem zweiten Führungskanal (112) zur gleitenden Aufnahme eines Endabschnitts mindestens des zweiten Metallrohrs (200) bestimmt ist,
- wobei die transversale Durchgangsöffnung (122) gemeinsam mit dem ersten Führungskanal (111) zur gleitenden Aufnahme eines Endabschnitts des ersten Metallrohrs (200) bestimmt ist,
und wobei
- der erste Führungskanal (111), der zweite Führungskanal (112) und der dritte Führungskanal (121) jeweils einen U-förmigen oder ähnlichen Querschnitt mit einem Kern aufweisen, der von zwei gegenüberliegenden Seitenflügeln (114, 115, 116, 117, 123, 124) gesäumt ist,
und ebenfalls wobei beim ersten Montagevorgang
- das Verbindungsstück (100A, 100B) derart eingerichtet ist, dass es das erste Metallrohr (200) und das mindestens zweite Metallrohr (200) umgibt, so dass
- die gegenüberliegenden Seitenflügel (123, 124) des dritten Führungskanals (121) die gegenüberliegenden Seitenflügel (116, 117) des zweiten Führungskanals (112) ganz oder teilweise verdecken, und
- sich die transversale Durchgangsöffnung (122) des mittigen Abschnitts (113) des ersten Führungskanals (111) ganz oder teilweise zugewandt erstreckt.

2. Verbindungsstück (100A, 100B) nach Anspruch 1, wobei
- die Breite des dritten Führungskanals (121) wesentlich größer als die Breite des zweiten Führungskanals (112) ist, und
- die Breite der transversale Durchgangsöffnung (122) wesentlich größer als die Breite des ersten Führungskanals (111) ist.

3. Verbindungsstück (100A, 100B) nach einem der Ansprüche 1 bis 2, wobei der erste Abschnitt des Verbindungsstücks (110A, 110B) und der zweite Abschnitt des Verbindungsstücks (120A, 120B) mit Löchern (130) versehen sind, die zur Aufnahme der lösbaren Befestigungsmittel konzipiert sind, so dass die lösbaren Befestigungsmittel mit dem ersten Metallrohr (200) und dem mindestens zweiten Metallrohr (200) im Eingriff sind.

4. Verbindungsstück (100A, 100B) nach einem der Ansprüche 1 bis 3, wobei der zweite Führungskanal (112) derart angeordnet ist, dass das eine seiner Enden mit dem mittigen Abschnitt (113) des ersten Führungskanals (111) direkt verbunden ist.

5. Verbindungsstück (100A, 100B) nach einem der Ansprüche 1 bis 4, wobei die transversale Durchgangsöffnung (122) in einem Endabschnitt des dritten Führungskanals (121) ausgebildet ist, wobei der Endabschnitt von einem vertikalen Halteflügel (125) beendet wird, der den Kern des dritten Führungskanals (121) säumt und der etwa senkrecht zu den zwei gegenüberliegenden Seitenflügeln (123, 124) des dritten Führungskanals (121) ist, wobei das Verbindungsstück (100A, 100B) derart eingerichtet ist, dass beim ersten Montagevorgang der vertikale Halteflügel (125) den mittigen Abschnitt des Seitenflügels (115) des ersten Führungskanals (111) ganz oder teilweise verdeckt, der vom zweiten Führungskanal (112) am weitesten entfernt ist.

6. Verbindungsstück (100A, 100B) nach einem der Ansprüche 1 bis 3, wobei der zweite Führungskanal (112) derart angeordnet ist, dass ein mittiger Abschnitt des zweiten Führungskanals (112) mit dem mittigen Abschnitt (113) des ersten Führungskanals (111) zusammenfällt, und
wobei der zweite Führungskanal (112) ferner zur gleitenden Aufnahme eines Endabschnitts eines dritten Metallrohrs (200), dem zweiten Metallrohr (200) zugewandt, bestimmt ist.

7. Verbindungsstück (100A, 100B) nach einem der Ansprüche 1 bis 3 und 6, wobei die transversale Durchgangsöffnung (122) in einem mittigen Abschnitt des dritten Führungskanals (121) ausgebildet ist.

8. Verbindungsstück (100A, 100B) nach einem der Ansprüche 1 bis 7, umfassend ferner einen dritten Abschnitt des Verbindungsstücks, der ein in einem vorher festgelegten Winkel abgewinkeltes Manschettenelement (140) und ein Verstärkungszwickel (150) umfasst,
- wobei das abgewinkelte Manschettenelement (140) einen ersten Endabschnitt und einen zweiten Endabschnitt umfasst, die derart eingerichtet sind, das vor dem ersten Montagevorgang der erste Endabschnitt zur Aufnahme im Inneren eines ersten Metallrohrs (200) bestimmt ist und der zweite Endabschnitt zur Aufnahme im Inneren eines zweiten Metallrohrs (200) bestimmt ist, und
- das Verbindungsstück (100A, 100B) derart eingerichtet ist, dass bei einem zweiten Montagevorgang nach dem ersten Montagevorgang das Verstärkungszwickel (150) bestimmt ist,
- in dem vorher festgelegten Winkel angeordnet zu sein, der von dem ersten Metallrohr (200) und dem zweiten Metallrohr (200) gebildet wird, und
- von den lösbaren Befestigungsmitteln am ersten Metallrohr (200) und am zweiten Metallrohr (200) derart demontierbar befestigt zu sein, dass die Verbindung zwischen dem ersten Metallrohr (200) und dem zweiten Metallrohr (200) verstärkt wird.

9. Konstruktionssystem zur Herstellung eines demontierbaren Metallgerüsts (20) eines verlagerbaren Gebäudes, insbesondere eines landwirtschaftlichen Gebäudes, wobei das Konstruktionssystem umfasst:
- mindestens zwei Metallrohre (200),
- mindestens ein Verbindungsstück (100A, 100B) nach einem der Ansprüche 1 bis 8 für die Montage der Metallrohre (200), und
- eine Vielzahl lösbarer Befestigungsmittel.

10. Demontierbares Metallgerüst (20) für ein verlagerbares Gebäude, insbesondere ein landwirtschaftliches Gebäude, umfassend:
- eine Vielzahl von Metallrohren (200), die Stützen, Dachbinder und Pfetten des Metallgerüsts (20) bilden,
wobei sich mindestens zwei Endabschnitte von Metallrohren (200) treffen und von einem Verbindungsstück (100A, 100B) nach einem der Ansprüche 1 bis 8 demontierbar montiert sind.

11. Montageverfahren (300) eines demontierbaren Metallgerüsts (20) eines verlagerbaren Gebäudes, insbesondere eines landwirtschaftlichen Gebäudes, wobei das Verfahren umfasst:
- einen ersten Bereitstellungsschritt (310) von mindestens zwei Metallrohren (200),
- einen zweiten Bereitstellungsschritt (320) von mindestens einem Verbindungsstück (100A, 100B) nach einem der Ansprüche 1 bis 8 für die Montage der Metallrohre (200),
- einen dritten Bereitstellungsschritt (330) einer Vielzahl lösbarer Befestigungsmittel,
- einen ersten Gleitschritt (340) eines Endabschnitts eines ersten Metallrohrs (200) im ersten Führungskanal (111) des ersten Abschnitts des Verbindungsstücks (110A, 110B), so dass sich der Endabschnitt des ersten Metallrohrs (200) über mindestens einen der Endabschnitte (111A, 111B) des ersten Führungskanals (111) hinaus erstreckt,
- einen zweiten Gleitschritt (350) eines Endabschnitts mindestens eines zweiten Metallrohrs (200) im zweiten Führungskanal (112) des ersten Abschnitts des Verbindungsstücks (110A, 110B), so dass der Endabschnitt des mindestens zweiten Metallrohrs (200) am Endabschnitt des ersten Metallrohrs (200) anschlägt, der in den ersten Führungskanal (111) eingesetzt ist, und
- einen Montageschritt (360) mit den lösbaren Befestigungsmitteln des zweiten Abschnitts des Verbindungsstücks (120A, 120B), des ersten Abschnitts des Verbindungsstücks (110A, 110B), des ersten Metallrohrs (200) und des mindestens zweiten Metallrohrs (200).

## Claims

1. A connection member (100A, 100B) intended to be used for the assembly of metal tubes (200) to form a demountable metal frame (20) of a relocatable building, in particular a farm building, the connection member (100A, 100B) comprising a first part of the connection member (110A, 110B) and a second part of the connection member (120A, 120B) which are designed to be removably assembled by removable fastening means at a first assembly operation,
wherein:
- the first part of the connection member (110A, 110B) comprises a first guide channel (111) and a second guide channel (112),
- the first guide channel (111) being intended slidingly to receive an end part of a first metal tube (200),
- the second guide channel (112) being intended slidingly to receive an end part of at least one second metal tube (200), the second guide channel (112) being positioned substantially perpendicular to a central portion (113) of the first guide channel (111),
- the second part of the connection member (120A, 120B) comprises a third guide channel (121) having a transverse through opening (122),
- the third guide channel (121) being intended, together with the second guide channel (112), slidingly to receive an end part of at least the second metal tube (200),
- the transverse through opening (122) being intended, together with the first guide channel (111), slidingly to receive an end part of the first metal tube (200)
and wherein:
- the first guide channel (111), the second guide channel (112) and the third guide channel (121) each have a U-shaped cross-section or similar with a web bordered by two opposite-facing side flanges (114, 115, 116, 117, 123, 124)
and also wherein, at the first assembly operation:
- the connection member (100A, 100B) is designed to surround the first metal tube (200) and the at least one second metal tube (200), so that:
- the opposite-facing side flanges (123, 124) of the third guide channel (121) cover all or part of the opposite-facing side flanges (116, 117) of the second guide channel (112), and
- the transverse through opening (122) extends opposite all or part of the central portion (113) of the first guide channel (111).

2. The connection member (100A, 100B) according to claim 1, wherein:
- the width of the third guide channel (121) is substantially greater than the width of the second guide channel (112), and
- the width of the transverse through opening (122) is substantially greater than the width of the first guide channel (111).

3. The connection member (100A, 100B) according to any of claims 1 to 2, wherein the first part of the connection member (110A, 110B) and the second part of the connection member (120A, 120B) are provided with holes (130) which are designed to receive removable fastening means so that the removable fastening means engage with the first metal tube (200) and the at least one second metal tube (200).

4. The connection member (100A, 100B) according to any of claims 1 to 3, wherein the second guide channel (112) is positioned so that one of the ends thereof is directly joined to the central portion (113) of the first guide channel (111).

5. The connection member (100A, 100B) according to any of claims 1 to 4, wherein the transverse through opening (122) is arranged in an end part of the third guide channel (121), the end part being terminated by a vertical retaining flange (125) bordering the web of the third guide channel (121) and which is substantially perpendicular to the two opposite-facing side flanges (123,124) of the third guide channel (121), the connection member (100A, 100B) being designed so that, at the first assembly operation, the vertical retaining flange (125) covers all or part of the central portion of the side flange (115) of the first guide channel (111) which is the furthest distant from the second guide channel (112).

6. The connection member (100A, 100B) according to any of claims 1 to 3, wherein the second guide channel (112) is positioned so that a central portion of the second guide channel (112) merges with the central portion (113) of the first guide channel (111), and
wherein the second guide channel (112) is additionally intended slidingly to receive an end part of a third metal tube (200) opposite the second metal tube (200).

7. The connection member (100A, 100B) according to any of claims 1 to 3 and 6, wherein the transverse through opening (122) is arranged in a central portion of the third guide channel (121).

8. The connection member (100A, 100B) according to any of claims 1 to 7, further comprising a third part of the connection member which comprises a sleeve element (140) angled at a predetermined angle and a reinforcing bracket (150),
- The angled sleeve element (140) comprising a first end part and a second end part which are designed so that, before the first assembly operation, the first end part is intended to be received inside a first metal tube (200) and the second end part is intended to be received inside a second metal tube (200), and
- the connection member (100A, 100B) is designed so that, at a second assembly operation after the first assembly operation, the reinforcing bracket (150) is intended to be:
∘ placed in the predetermined angle forced by the first metal tube (200) and the second metal tube (200), and
∘ removably fastened by the removable fastening means to the first metal tube (200) and to the second metal tube (200), to reinforce the joint between the first metal tube (200) and the second metal tube (200).

9. A construction system to form a demountable metal frame (20) of a relocatable building, in particular a farm building the construction system comprising:
- at least two metal tubes (200),
- at least one connection member (100A, 100B) according to any of claims 1 to 8, for assembly of the metal tubes (200), and
- a plurality of removable fastening means

10. A demountable metal frame (20) for relocatable building, in particular a farm building, comprising:
- a plurality of metal tubes (200) forming posts, purlins and roof trusses of the metal frame (20),
wherein at least two end parts of metal tubes (200) join together and are removably assembled by a connection member (100A, 100B) according to any of claims 1 to 8.

11. A method (300) for assembling a demountable metal frame (20) of a relocatable building, in particular a farm building, the method comprising:
- a first supply step (310) of at least two metal tubes (200),
- a second supply step (320) of at least one connection member (100A, 100B) according to any of claims 1 to 8 for assembling the metal tubes (200),
- a third supply step (330) of a plurality of removable fastening means,
- a first sliding step (340) of an end part of a first metal tube (200) in the first guide channel (111) of the first part of the connection member (110A, 110B), so that the end part of the first metal tube (200) extends beyond at least one of the end parts (111A, 111B) of the first guide cannel (111),
- a second sliding step (350) of an end part of at least one second metal tube (200) in the second guide channel (112) of the first part of the connection member (110A, 110B), so that the end part of the at least one second metal tube (200) abuts the end part of the first metal tube (200) which is inserted in the first guide channel (111), and
- an assembly step (360) with the removable fastening means, of the second part of the connection member (120A, 120B), the first part of the connection member (110A, 110B), the first metal tube (200) and the at least one second metal tube (200).
